# EUROPÄISCHE PATENTSCHRIFT

(11) **EP 4 333 162 B1**
(45) Veröffentlichungstag und Bekanntmachung des Hinweises auf die Patenterteilung: **16.07.2025**
(21) Anmeldenummer: 23192219.6
(22) Anmeldetag: 18.08.2023
(51) Int. Cl.: H01M 10/613, H01M 50/289, H01M 50/251, H01M 50/204, H01M 10/6551, H01M 10/0525, H01M 10/42, H01M 10/6554

(54) **TRAGSTRUKTUR FÜR EINE ANZAHL AN BATTERIEMODULEN UND BATTERIEMODULANORDNUNG**
SUPPORT STRUCTURE FOR A NUMBER OF BATTERY MODULES, AND BATTERY MODULE ASSEMBLY
STRUCTURE DE SUPPORT POUR UN CERTAIN NOMBRE DE MODULES DE BATTERIE ET ENSEMBLE MODULE DE BATTERIE

(30) Priorität: 02.09.2022 DE 102022122309
(43) Veröffentlichungstag der Anmeldung: 06.03.2024
(73) Patentinhaber: Witzenmann GmbH, 75175 Pforzheim (DE)
(72) Erfinder: Ehrenberger, David, 75203 Königsbach-Stein (DE); LEIPPI, Alexander, 75177 Pforzheim (DE)
(74) Vertreter: LBP Lemcke, Brommer & Partner Patentanwälte mbB

(56) Entgegenhaltungen:
- WO-A1-2019/169080
- US-A1- 2013 017 428
- US-A1- 2019 044 116
- US-A1- 2019 140 229

## Beschreibung

Die Erfindung betrifft eine Tragstruktur für eine Anzahl an Batteriemodulen, aufweisend: eine Mehrzahl an Tragelementen, welche Tragelemente voneinander beabstandet angeordnet sind und zwischen sich eine Anzahl an Fächern ausbilden, welche Fächer zur Aufnahme jeweils eines Batteriemoduls bestimmt sind, gemäß Anspruch 1.

Die Erfindung betrifft außerdem eine Batteriemodulanordnung, umfassend eine erfindungsgemäße Tragstruktur und eine Anzahl an Batteriemodulen, die in Fächern der Tragstruktur aufgenommen sind, gemäß Anspruch 15. Batteriemodule, insbesondere auf Lithium-Basis, werden heutzutage zunehmend zum (temporären) Speichern von elektrischer Energie und zur Versorgung von Einrichtungen mit elektrischer Energie verwendet. Zu diesem Zweck werden üblicherweise eine Vielzahl von Batteriemodulen zusammengeschaltet und in speziellen Regalsystemen in einer gemeinsamen Einhausung untergebracht, z.B. nach Art eines (Schiffs-) Containers.

Im Betrieb erzeugen derartige Batteriemodule ein gehöriges Maß an Abwärme, sodass regelmäßig eine Temperierung (speziell eine Kühlung) vorgesehen ist, insbesondere eine fluidbasierte Kühlung, bei der die einzelnen Batteriezellen intern von einem Kühlfluid durchströmt sind. Nachteilig ist hierbei, dass ein entsprechendes Fluid-Kühlsystem zusätzlich zu dem genannten Regalsystem vorzusehen ist, wodurch die gesamte Konstruktion aufwändig und teuer wird und einen vergrößerten Bauraumbedarf bedingt. Dabei wird zusätzlicher Werkstoff verbraucht. Um die Montierbarkeit und Zugänglichkeit für eine Wartung zu gewährleisten, sind dabei besondere konstruktive Maßnahmen nötig, die ebenfalls einen negativen Einfluss auf den Bauraum und die Systemkosten haben.

WO 2019/169080 A1 offenbart einen Batterieträger für ein elektrisches Fahrzeug mit einer Bodenstruktur, die eine obere Fläche aufweist, die so konfiguriert ist, dass sie mit Batteriemodulen verbunden werden kann. Der Batterieträger umfasst auch eine Vielzahl von Kühlelementen, die sich integral entlang von Abschnitten der Bodenstruktur erstrecken und so konfiguriert sind, dass sie Wärme von den Batteriemodulen ableiten, die an der oberen Fläche der Bodenstruktur angeordnet sind.

US 2013/017428 A1 beschreibt eine Energiespeichervorrichtung, die eine Vielzahl von Batterieablagen umfasst die im Wesentlichen parallel zueinander angeordnet sind, so dass sie mindestens eine Reihe bilden. Die Batterieablagen sind mit einem ersten und einem zweiten Kanal verbunden. Über einen Lufteinlasswird Luft in den ersten Kanal einsaugt, und über einen Luftauslass wird Luft aus dem zweiten Kanal zur Außenseite der Energiespeichervorrichtung abführt.

Es besteht Bedarf an einem Tragsystem bzw. einer Tragstruktur für Batteriemodule sowie an einer entsprechenden Batteriemodulanordnung, das bzw. die eine Temperierung der Batteriemodule ermöglicht, ohne unter den o.g. Nachteilen in Sachen Bauraumbedarf, Werkstoffverbrauch, Kosten, Aufwand und Zugänglichkeit zu leiden, und das je nach Anforderung skalierbar ist.

Diese Aufgabe wird erfindungsgemäß gelöst durch eine Tragstruktur mit den Merkmalen des Anspruchs 1 sowie durch eine Batteriemodulanordnung mit den Merkmalen des Anspruchs 15.

Vorteilhafte Weiterbildungen der Erfindung sind in den jeweiligen Unteransprüchen definiert.

Erfindungsgemäß umfasst eine Tragstruktur für eine Anzahl an Batteriemodulen eine Mehrzahl an Tragelementen, welche Tragelemente voneinander beabstandet angeordnet sind und zwischen sich eine Anzahl an Fächern ausbilden, welche Fächer zur Aufnahme jeweils eines Batteriemoduls bestimmt sind; wobei wenigstens eine Anzahl der Tragelemente (nachfolgend auch als "fluidleitende Tragelemente" bezeichnet) als Fluidleitungselemente ausgebildet sind oder Fluidleitungselemente umfassen, welche Fluidleitungselemente sich bis in den jeweiligen Bereich der Fächer erstrecken und über welche Fluidleitungselemente ein Temperierfluid für die Batteriemodule in den Bereich der Fächer zuführbar und von dort wieder ableitbar ist, wobei die fluidleitenden Tragelemente paarweise lösbar mit wenigstens einem Dichtelement miteinander verspannt sind, vorzugsweise stoffschlüssig verklebt, verlötet oder verschweißt. So lassen sich Tragstrukturen beliebiger Größe je nach Anforderung aufbauen.

Vorteilhafterweise betrifft dies vor allem vertikale Tragelemente, die eine Art Regalstruktur ausbilden und die zwischen sich horizontale Tragelemente nach Art von Regalböden oder dgl. aufnehmen, auf denen die Batteriemodule zwischen den vertikalen Tragelemente angeordnet werden können. Die genannten vertikalen und horizontalen Tragelemente definieren (speziell quaderförmige) Fächer oder Aufnahmen für die Batteriemodule, wie dies von herkömmlichen Regalsystemen oder "Racks" bekannt ist.

Die Erfindung beinhaltet nun, dass zumindest einige der Tragelemente, wobei grundsätzlich nicht zwischen vertikalen und horizontalen Tragelementen zu unterscheiden ist, eine Doppelfunktion übernehmen - nämlich zugleich als statisches Tragteil und als fluidführendes Leitungsteil. Es handelt sich also um eine Funktionsintegration von Tragfunktion des Batteriemodulracks und Fluidführung/Verteilung eines Kühlmediums für das Thermomanagement der Batteriemodule in einem System.

Erfindungsgemäß ist eine Batteriemodulanordnung, umfassend die erfindungsgemäße Tragstruktur und eine Anzahl an Batteriemodulen, die in Fächern der Tragstruktur aufgenommen sind, dadurch gekennzeichnet, dass die Batteriemodule (oder zumindest einige der Batteriemodule) einen internen Temperierkreislauf aufweisen und fluidisch an die fluidleitenden Tragelemente angeschlossen sind.

Auf hierdurch ergibt sich die bereits angesprochene vorteilhafte Funktionsintegration.

Anders ausgedrückt wird vorgeschlagen, eine Battery Cooling Pipe (BCP, Batteriekühlleitung) zu bauen, welche zusätzlich zur Funktion der Fluidführung für ein Temperiermedium die Funktion einer Tragstruktur für die Batteriemodule abbildet.

Die BCP ist dabei bevorzugt derart ausgebildet, dass mindestens ein Teil der Tragstruktur, d.h. eine Anzahl der Tragelemente, welche Tragelemente die Tragstruktur bilden, geschlossen nach Art einer Rohrleitung ausgeführt ist, um die Funktion der Fluidführung darzustellen. Die Verbindung zur restlichen Tragstruktur, d.h. den restlichen Tragelementen kann lösbar durch eine Schraubverbindung oder vorzugsweise unlösbar durch eine umformende Verbindung, wie beispielsweise Nieten, sowie höchst vorzugsweise stoffschlüssig durch Kleben, Löten oder Schweißen hergestellt werden.

Die fluidführende Tragstruktur (d.h. die fluidführenden Tragelemente) kann/können hierbei zur Verteilung eines Massenstroms des Temperiermediums auf die Verbraucher (also die Batteriemodule) genutzt werden, indem beispielweise durch gezieltes Anbringen von Aushalsungen oder dgl. entsprechende Abzweige hergestellt werden.

Eine entsprechende Variante der erfindungsgemäßen Tragstruktur weist Tragelemente auf, die fluidführend und mit mehreren Hohlkammern ausgebildet sind. Vorzugsweise kommen zwei Hohlkammern zum Einsatz, um Vor- und Rücklauf des Temperiermediums in einem einzelnen Tragelement darstellen zu können. Ein besonders vorteilhaftes Dreikammersystem kann beispielweise einen Vorlauf, einen Rücklauf sowie eine weitere Kammer für Löschmittel und/oder Spülgas beinhalten. Das Löschmittel kann im Störfall freigesetzt werden.

Optional können weitere Kammern zum Führen von Kabeln oder zur Kommunikation sowie zur Rauchgasleitung vorgesehen sein und entsprechend genutzt werden.

Zur Verbindung der fluidführenden Tragelemente (kurz: FTE) sind selbige unter Zwischenschaltung wenigstens eines Dichtelements (z.B. O-Ring) lösbar miteinander verspannt, vorzugsweise stoffschlüssig verklebt, verlötet oder verschweißt

In einer weiteren Variante können die FTE durch Knotenelemente, welche Knotenelemente vorzugsweise urformend hergestellt sind, z.B. als Gussteile, verbunden und verschaltet sein. Diese Knotenelemente können zusätzliche Funktionen bereitstellen, wie z.B. Entlüftungsventile, Beprobung, Messelemente/Sensoren, Ein- und Ausspeisepunkte oder Fixierungspunkte.

Die Verbindung der FTE mit den Knotenelementen kann ja nach Anforderung nicht lösbar stoffschlüssig oder lösbar ausgeführt sein, um der gewünschten Montierbarkeit Rechnung zu tragen.

Die FTE können auch genutzt werden, um Wärme mit der Umgebung auszutauschen. Dazu können Kühlrippen oder vergleichbare Strukturen vorhanden sein.

Vorzugsweise sind die genannten Abzweige an den FTE derart ausgeführt, dass die Fluidkontaktierung bei der Montage (vorzugsweise durch Einschieben) der Batteriemodule in die Tragstruktur bzw. in die betreffenden Fächer direkt erzeugt wird. Eine Sicherung der Verbindung kann durch das ohnehin regelmäßig vorgesehene Halten der Batteriemodule in Position innerhalb der Tragstruktur erfolgen. Separate zusätzliche Sicherungen sind somit nicht erforderlich.

Eine weitere Variante der Erfindung sieht vor, dass die (Rack-) Fächer mit Bodenplatten und integrierter Bodenplattenkühlung, insbesondere mittels des Temperierfluids, ausgestattet sind, auf welchen Bodenplatten die Batterien direkt wärmeleitend angebracht sein können. Die Bodenplattenkühlung kann dabei direkt stoffschlüssig, vorzugsweise ohne zusätzliches Dichtelement, an eine Zuführung und Abführung von Temperierfluid zu den FTE angebunden sein. Die direkte Wärmeleitung zwischen Bodenplatten und Batteriemodulen kann dabei über eine Wärmeleitpaste oder eine mechanische Verspannung realisiert werden.

Eine weitere Ausgestaltungsvariante sieht vor, die (Rackfächer-) Bodenplatten mit Wärmerohren auszustatten, welche Wärmerohre vorzugsweise in die FTE hineinragen und dort Wärme abgeben. Eine zusätzliche Fluidkontaktierung kann hierbei entfallen.

Werden an den FTE (zusätzliche) vertikale Kühlplatten angebunden, können die Batteriemodule (auch) seitlich entwärmt werden, nachdem sie thermisch an die Kühlplatten angebunden wurden (z.B. mittels Wärmeleitpaste und/oder mechanische Verspannung).

Diese Variante kann insbesondere vorteilhaft sein, wenn die Batteriemodule einen internen Immersionskühlkreislauf aufweisen, um die entstehende Wärme an eine äußere Fläche zu transportieren, von der sie besser abgeführt werden kann. Es wird dabei Bauraum eingespart und eine homogenere Temperaturverteilung im System erreicht.

Folgende Ausgestaltungen haben sich als besonders vorteilhaft erwiesen:
Eine erste Weiterbildung der erfindungsgemäßen Tragstruktur sieht vor, dass wenigstens eine Anzahl der Tragelemente selbst umfänglich geschlossen und als Fluidleitungselemente ausgebildet sind. Hierdurch wird eine besondere weitreichende Funktionsintegration erreicht.

Eine zweite Weiterbildung der erfindungsgemäßen Tragstruktur sieht vor, dass die fluidleitenden Tragelemente lösbar, insbesondere durch Verschrauben, oder unlösbar, insbesondere durch Nieten oder durch Stoffschluss, z.B. durch Löten oder Schweißen, mit einer restlichen, nicht fluidleitenden Tragstruktur verbunden sind. Auf diese Weise wird eine stabile, beliebig ausbaubare Tragstruktur erreicht.

Eine dritte Weiterbildung der erfindungsgemäßen Tragstruktur sieht vor, dass wenigstens eine Anzahl der fluidleitenden Tragelemente mindestens zwei fluidisch getrennte Kammern oder Fluidleitungselemente aufweisen. Auf diese Weise kann innerhalb der Tragelemente sowohl ein Fluidvorlauf als auch ein - Rücklauf ausgebildet werden, was die Anzahl erforderlicher Bauteil weiter verringert.

Eine andere Weiterbildung der erfindungsgemäßen Tragstruktur sieht vor, dass wenigstens eine Anzahl der fluidleitenden Tragelemente mindestens drei fluidisch getrennte Kammern oder Fluidleitungselemente aufweisen. Dadurch lassen sich weitere Funktionen in die FTE integrieren.

Zum Beispiel kann, wie schon erwähnt, vorgesehen sein, dass wenigstens eine Anzahl der fluidleitenden Tragelemente zusätzliche Kammern zum Führen von Kabeln oder zur Kommunikation oder zur Rauchgasleitung aufweisen.

Eine noch andere Weiterbildung der erfindungsgemäßen Tragstruktur sieht vor, dass die fluidleitenden Tragelemente durch Knotenelemente, welche Knotenelemente vorzugsweise urformend hergestellt sind, verbunden und verschaltet sind. Hierauf wurde weiter oben schon detailliert hingewiesen.

Die Knotenelemente können bevorzugt zusätzliche Funktionen, wie Entlüftungsventile, Beprobung, Messelemente/Sensoren, Ein- und Ausspeisepunkte oder Fixierungspunkte, aufweisen, worauf ebenfalls schon hingewiesen wurde. Dadurch kann ein funktionaler Mehrwert erreicht werden.

Dabei kann, bei entsprechender Weiterbildung, eine jeweilige Verbindung der fluidleitenden Tragelemente mit den Knotenelementen nicht lösbar, vorzugsweise stoffschlüssig, oder lösbar ausgeführt sein, um weitestgehende Modularität zu gewährleisten.

In Weiterbildung der erfindungsgemäßen Tragstruktur kann auch vorgesehen sein, dass fluidische Anschlussstrukturen für die Batteriemodule im Bereich der Fächer vorhanden sind, welche Anschlussstrukturen vorzugsweise flexibel ausgebildet sind, höchst vorzugsweise in Form von Wellschlauchabschnitten oder Bälgen, die in einer Einschieberichtung beim Einschieben der Batteriemodule in die Fächer zugänglich sind, um beim Einschieben der Batteriemodule eine fluidische Verbindung von Batteriemodulen und fluidleitenden Tragelementen herzustellen. Dadurch lässt sich eine Art "Plug-and-Play"-Verbindung zwischen den Batteriemodulen und der Tragstruktur herstellen, die besonders einfach zu realisieren ist. Entsprechend lässt sich mit einer zugehörigen elektrischen Verbindung für die Batteriemodule und/oder einer Datenverbindung (z.B. zum BMS - Batterie-Managementsystem) verfahren.

Eine entsprechende Weiterbildung der erfindungsgemäßen Batteriemodulanordnung beinhaltet, dass die fluidischen Anschlussstrukturen für die Batteriemodule im Bereich der Fächer in der Einschieberichtung mit zumindest teilweise komplementären, insbesondere starren Anschlussstrukturen der Batteriemodule fluchten, um beim Einschieben der Batteriemodule eine fluidische Verbindung von Batteriemodulen und fluidleitenden Tragelementen quasi automatisch herzustellen, wobei vorzugsweise die komplementären Anschlussstrukturen der Batteriemodule in die Anschlussstrukturen der Tragstruktur eingreifen, oder umgekehrt, vorzugsweise unter Zwischenschaltung wenigstens eines Dichtelements, welches Dichtelement vorzugsweise an den Anschlussstrukturen der Batteriemodule angeordnet ist.

In Weiterbildung der erfindungsgemäßen Tragstruktur kann auch noch vorgesehen sein, dass diese eine (Positions-)Sicherungseinrichtung für die Batteriemodule im Bereich der Fächer aufweist, welche Sicherungseinrichtung zugleich zum Sichern der fluidischen Verbindung ausgebildet ist. Auch hierdurch wird eine verbesserte Funktionsintegration erreicht.

In Weiterbildung der erfindungsgemäßen Tragstruktur kann darüber hinaus noch vorgesehen sein, dass im Bereich wenigstens einiger Fächer jeweils eine Bodenplatte vorhanden ist, welche Bodenplatte für eine wärmeleitende Kontaktierung zumindest eines Batteriemoduls bestimmt ist und welche Bodenplatte fluidisch mit wenigstens einem fluidleitenden Tragelement verbunden ist. Auf die Vorteile dieser Ausgestaltung wurde weiter oben schon hingewiesen.

In Weiterbildung der erfindungsgemäßen Tragstruktur kann des Weiteren vorgesehen sein, dass im Bereich wenigstens einiger Fächer jeweils eine Bodenplatte vorhanden ist, welche Bodenplatte für eine wärmeleitenden Kontaktierung wenigstens eines Batteriemoduls bestimmt ist und welche Bodenplatte über wenigstens ein Wärmerohr mit wenigstens einem fluidleitenden Tragelement verbunden ist. Auch auf die Vorteile dieser Ausgestaltung wurde weiter oben schon hingewiesen.

Schließlich kann in Weiterbildung der erfindungsgemäßen Tragstruktur noch vorgesehen sein, dass im Bereich wenigstens einiger Fächer jeweils wenigstens eine seitliche Kühlplatte vorhanden ist, welche Kühlplatte für eine wärmeleitenden Kontaktierung wenigstens eines Batteriemoduls bestimmt ist. Auf die Vorteile dieser Ausgestaltung wurde weiter oben ebenfalls schon hingewiesen.

Weitere Eigenschaften und Vorteile der Erfindung ergeben sich aus den nachfolgend anhand der Zeichnung beschriebenen Ausführungsbeispielen.
- Figur 1: zeigt schematisch eine erfindungsgemäße Batteriemodulanordnung;
- Figur 2: zeigt schematisch eine erfindungsgemäße Batteriemodulanordnung mit einer erfindungsgemäßen Tragstruktur;
- Figur 3: zeigt ein Detail bei einer erfindungsgemäßen Batteriemodulanordnung bzw. Tragstruktur;
- Figur 4: zeigt ein weiteres Detail bei einer erfindungsgemäßen Batteriemodulanordnung bzw. Tragstruktur; und
- Figur 5: zeigt noch ein weiteres Detail bei einer erfindungsgemäßen Batteriemodulanordnung bzw. Tragstruktur.

Gleiche Bezugszeichen bezeichnen in allen Figuren gleiche oder zumindest gleich wirkende Elemente.

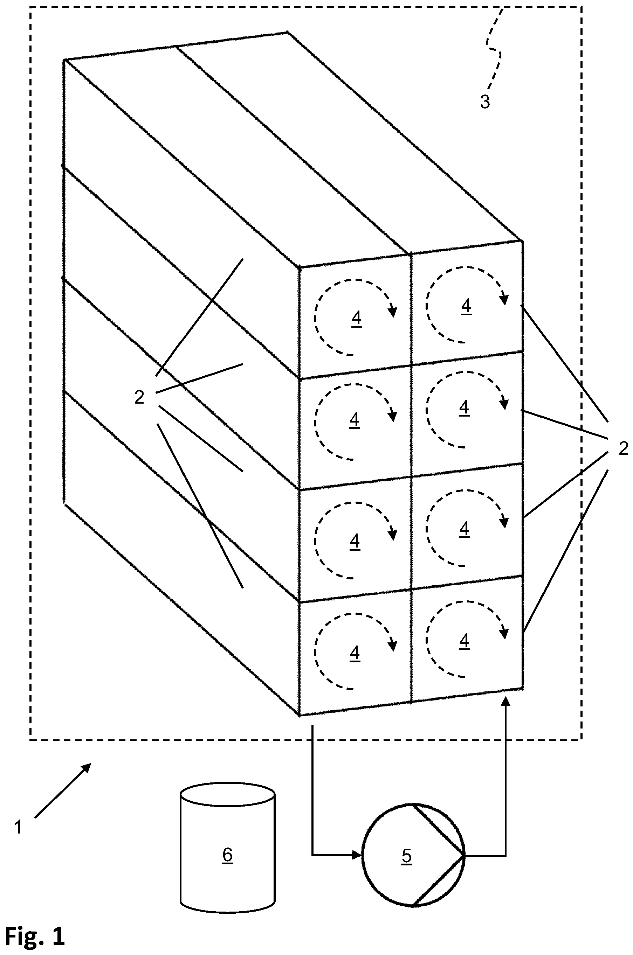

In Figur 1 ist bei Bezugszeichen 1 eine generische Batteriemodulanordnung gezeigt, die eine Mehrzahl von Batteriemodulen 2 umfasst, die gestapelt in einer Anordnung von (horizontalen) Reihen und (vertikalen) Spalten platziert sind. Regelmäßig befinden sich die Batteriemodule 2 innerhalb einer geeigneten Einhausung 3, die in Figur 1 nur symbolisch gestrichelt dargestellt ist.

Gemäß Figur 1 sind die Batteriemodule 2 jeweils mit einem internen Temperierkreislauf für ein Temperierfluid ausgestattet, welche Temperierkreislauf bei Bezugszeichen 4 symbolisch dargestellt ist. In fluidischer Wirkverbindung mit den internen Temperierkreisläufen 4 ist ein Fördermittel 5 vorgesehen, um das Temperierfluid (Temperiermedium) den einzelnen Batteriemodulen 2 zuzuführen und anschließend (nach Wärmeübergang) von dort wieder abzuführen. Bezugszeichen 6 bezeichnet ein Tank- oder Vorratsmittel für das Temperierfluid. Das Fördermittel 5 und das Vorratsmittel 6 bilden einen externen Temperierkreislauf für das Temperierfluid, welcher externe Temperierkreislauf in den weiteren Figuren aus Gründen der Übersichtlichkeit nicht erneut dargestellt ist. Der externe Temperierkreislauf muss nicht zwangsläufig außerhalb der Einhausung 3 angeordnet sein.

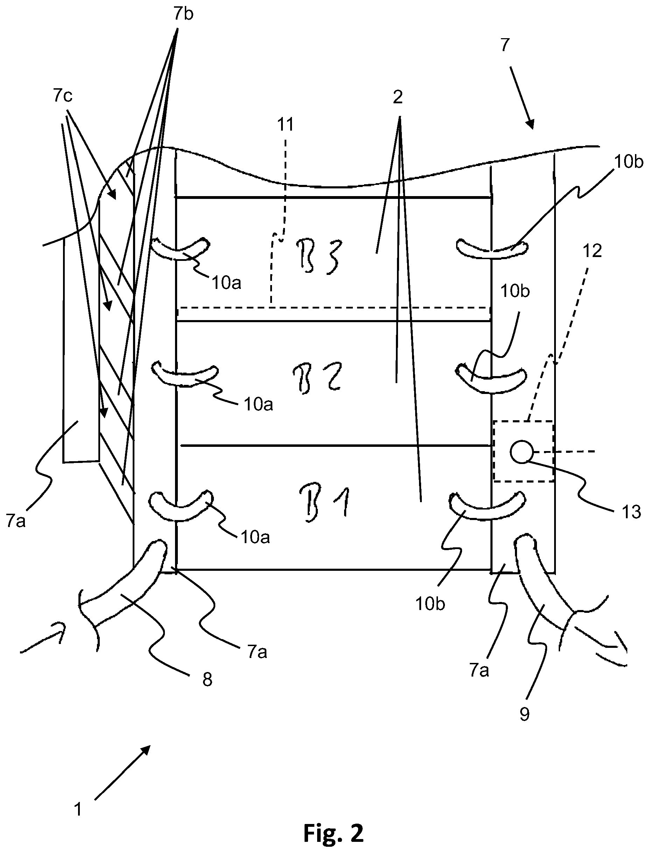

Figur 2 zeigt eine etwas detailliertere Darstellung der Batteriemodulanordnung 1 bzw. einer vergleichbaren Anordnung, bei der die Batteriemodule 2 innerhalb einer Tragstruktur 7 nach Art eines Racks oder Regals angeordnet sind. Eine solche Tragstruktur 7 ist grundsätzlich auch bei der Batteriemodulanordnung 1 gemäß Figur 1 vorhanden, dort jedoch aus Gründen der Übersichtlichkeit nicht dargestellt.

Wie man der Figur 2 entnimmt, umfasst die Tragstruktur 7 zunächst einer Reihe von vertikalen Tragelementen 7a (Pfosten), die untereinander zumindest zum Teil durch horizontale Tragelemente 7b verbunden sind, um die genannte Rack- oder Regalstruktur zu schaffen. Auf diese Weise definieren die vertikalen Tragelemente 7a und die horizontalen Tragelemente 7b quaderförmige Aufnahmen bzw. Fächer 7c zum Einschieben bzw. Einsetzen der Batteriemodule 2, wie dargestellt. Die Tragstruktur 7 ist hinsichtlich einer Anzahl und/oder geometrischen Anordnung der Batteriemodule 2 nicht auf die in den Figuren 1 und 2 dargestellte Ausgestaltung hinsichtlich Form und/oder Größe beschränkt.

Wie man insbesondere der Figur 2 entnimmt, fungieren zumindest die beiden vorderen vertikalen Tragelemente 7a nicht nur als Strukturelemente, sondern zusätzlich auch als Leitungselemente (FTE) für das Temperierfluid (vergleiche Figur 1). Dazu weist beispielsweise das vordere linke Tragelement 7a einen Anschluss 8 zum Einleiten des Temperierfluids auf, während beispielsweise das vordere rechte Tragelement 7a einen Anschluss 9 zum Ausleiten des Temperierfluids aufweist. Das vordere linke Tragelement 7a kann zu diesem Zweck selbst als Fluidleitungselement, also umfänglich geschlossen nach Art eines Rohrs, ausgebildet sein, oder es kann innenliegend ein zusätzliches Fluidleitungselement umfassen. Es fungiert vorzugsweise als Verteilelement, von dem aus das Temperierfluid den einzelnen Batteriemodulen 2 (in Figur 2 auch als B1, B2, B3, ... bezeichnet) zugeführt werden kann. Dazu sind bei der Ausgestaltung in Figur 2 fluidleitende Verbindungselemente 10a z.B. in Form von Wellschlauchabschnitten zwischen dem vorderen linken Tragelement 7a und den einzelnen Batteriemodulen 2 vorgesehen, die bevorzugt mit den jeweiligen Temperierkreisläufen 4 (vergleiche Figur 1) der Batteriemodule 2 in fluidischer Wirkverbindung stehen.

Das vordere rechte Tragelement 7a ist vorzugsweise entsprechend ausgebildet und dient zum Sammeln und Ableiten des Temperierfluids aus den einzelnen Batteriemodulen 2. Zu diesem Zweck sind fluidleitende Verbindungselemente 10b z.B. in Form von Wellschlauchabschnitten zwischen dem vorderen rechten Tragelement 7a und den einzelnen Batteriemodulen 2 vorgesehen, die bevorzugt ebenfalls mit den jeweiligen Temperierkreisläufen 4 (vergleiche Figur 1) der Batteriemodule in fluidischer Wirkverbindung stehen.

Nicht alle vertikalen Tragelemente 7a müssen als fluidleitende Tragelemente ausgebildet sein. Gemäß der Ausgestaltung in Figur 2 sind beispielsweise nur die beiden vorderen vertikalen Tragelemente 7a als fluidleitende Tragelemente ausgebildet. Die beiden hinteren vertikalen Tragelemente 7a, von denen in Figur 2 aus Darstellungsgründen nur eines erkennbar ist, müssen nicht fluidleitend ausgebildet sein, sondern können einfache Tragpfosten darstellen.

In Figur 2 ist zwischen den Batteriemodulen B2 und B3 exemplarisch noch eine Bodenplatte 11 eingezeichnet; entsprechende Bodenplatten 11 können auch zwischen den anderen Batteriemodulen 2 vorgesehen sein. Bei entsprechender wärmeleitender Verbindung zwischen der Bodenplatte 11 und den benachbarten Batteriemodulen B2 und B3 (beispielsweise unter Verwendung von Wärmeleitpaste) kann eine zusätzliche Temperierung der Batteriemodule erfolgen. Dazu kann auch die Bodenplatte 11 fluidleitend mit dem Temperierkreislauf der Batteriemodulanordnung 1 verbunden sein, was in Figur 2 nicht explizit dargestellt ist. Alternativ oder zusätzlich besteht auch die Möglichkeit, die Bodenplatte 11 über Wärmerohre oder dergleichen wärmeleitend mit den benachbarten Batteriemodulen B2 und/oder B3 zu verbinden, um eine Wärmeabfuhr zu ermöglichen. Auch dies ist in Figur 2 nicht explizit dargestellt.

Bezugszeichen 12 bezeichnet ein exemplarisch dargestelltes Knotenelement, welches zum (lösbaren) Verbinden von einzelnen, kürzeren Abschnitten der vertikalen Tragelemente 7a eingesetzt werden kann. Vorzugsweise sind derartige Knotenelement 12 urformend hergestellt, beispielsweise also in einem Gießverfahren, und umfassen zusätzliche Funktionselemente, wie den in Figur 2 bei Bezugszeichen 13 exemplarisch dargestellten Sensor, bei dem es sich - ohne Beschränkung - um einen Temperatursensor handeln kann.

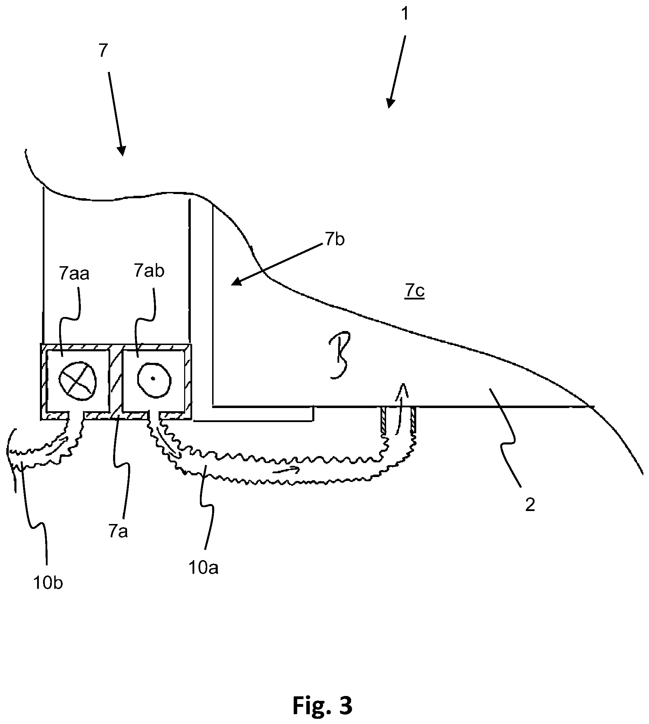

Figur 3 zeigt einen teilweisen, horizontalen Schnitt durch eine ähnliche Batteriemodulanordnung 1, wie sie in der Figur 2 dargestellt ist. Der wesentliche Unterschied besteht darin, dass das vertikale Tragelement 7a vorliegend zwei (Hohl-) Kammern 7aa, 7ab aufweist, von denen die eine (linke) 7aa zum Ableiten von erwärmtem Temperierfluid dient, während die andere (rechte) 7ab zum Zuführen von frischen Temperierfluid bestimmt ist. Auf diese Weise kann ein und dasselbe Tragelement 7a sowohl zum Zuführen als auch zum Ableiten von Temperierfluid verwendet werden.

Um einen thermischen Kurzschluss möglichst zu verhindern, kann der Querschnitt das Elements 7a derart ausgeführt sein, dass sich eine möglichst geringe Wärmeübertragungsfläche zwischen Vor- und Rücklauf ergibt. Zusätzlich oder alternativ kann ein thermisch isolierendes Element (nicht gezeigt) zwischen den Kammern 7aa, 7ab eingebracht werden.

Weiterhin ist es auch möglich, einen Liner (vorzugsweise aus Kunststoff) in das Tragelement 7a einzuziehen (nicht gezeigt) oder das Tragelement 7a selbst aus einem thermisch isolierenden Material herzustellen. Vorzugsweise handelt es sich bei dem Tragelement 7a um ein Extrusionsprofil aus Kunststoff, höchst vorzugsweise einem Pultrusionsprofil mit optional eingelegten (Schaum-)Kernen zur Erhöhung des Flächenträgheitsmoments und zur Verbesserung der thermischen Isolierung.

Die Erfindung ist keinesfalls auf Tragelemente 7a mit einer oder zwei (Hohl-) Kammern beschränkt; selbst verständlich können noch weitere Kammern vorgesehen sein, um beispielsweise Kabel zu führen und/oder Löschmittel o. ä. Substanzen zu leiten. Das Löschmittel kann auch druckbeaufschlagt im Profil (Tragelement 7a) vorgehalten werden, um im Brandfall über eine geeignete Vorrichtung, wie beispielsweise eine Berstscheibe, ausgebracht zu werden.

Ebenso können hier und bei allen übrigen Ausgestaltungen grundsätzlich auch die horizontalen Tragelemente 7b als Leitungselemente für das Temperierfluid fungieren, was in den Figuren allerdings nicht dargestellt ist.

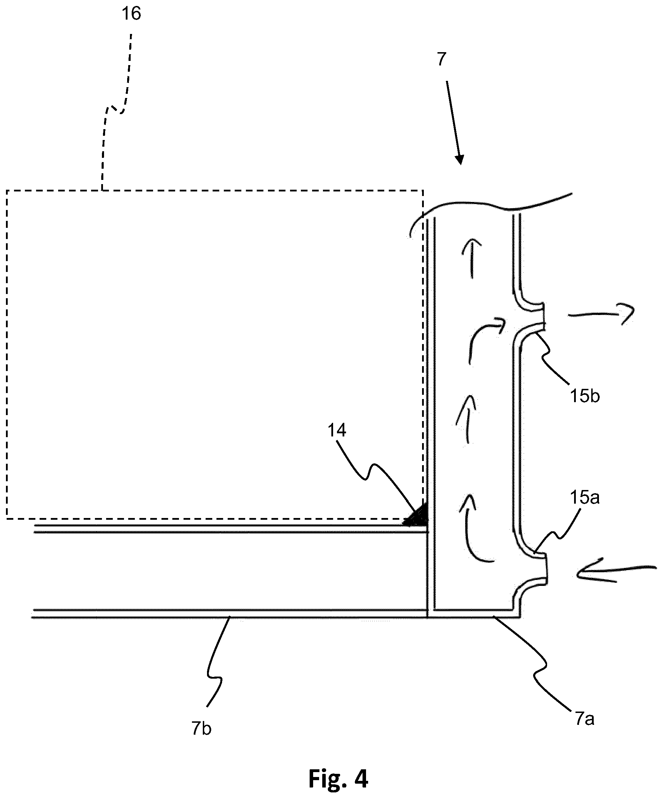

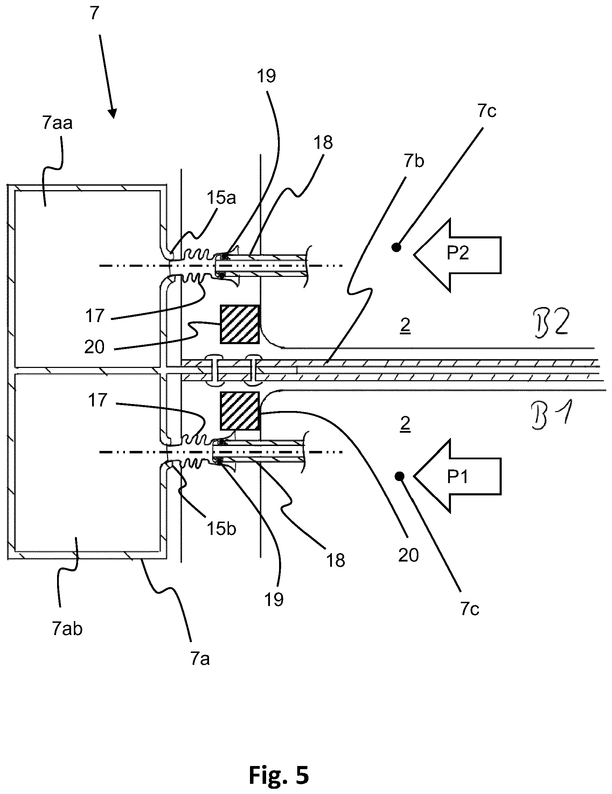

In Figur 4 ist ein teilweiser vertikaler Schnitt durch die Tragstruktur 7 dargestellt. Erkennbar ist ein horizontales Tragelement 7b, das bei Bezugszeichen 14 mit einem vertikalen Tragelement 7a stoffschlüssig verbunden (verklebt oder verschweißt) ist. Die Verbindung kann abweichend insbesondere auch lösbar ausgeführt sein (vgl. Figur 5). Das Tragelement 7a ist wiederum als Leitungselement für ein Temperierfluid ausgebildet, welches Temperierfluid bei der Aushalsung 15a in das Tragelement 7a eingeleitet und in dem Tragelement 7a geführt wird, beispielsweise bis zu der weiteren Aushalsung 15b, von wo es zu einem hier nicht gezeigten Batteriemodul gelangt (vergleiche beispielsweise Bezugszeichen 10a in Figur 2).

Außerdem zeigt Figur 4 (gestrichelt) noch eine seitliche Kühlplatte 16, die vorzugsweise wärmeleitend seitlich mit einem in der Tragstruktur 7 aufgenommenen Batteriemodul (hier nicht gezeigt) in Kontakt gebracht wird, um eine zusätzliche Temperierung des Batteriemoduls zu erreichen, insbesondere unter Verwendung von Wärmeleitpaste. Die seitliche Kühlplatte 16 kann fluidleitend an den Temperierkreislauf, d.h. an das FTE 7a angeschlossen sein. Zusätzlich oder alternativ kommt - analog zu der Bodenplatte 11 gemäß Figur 2 - der Einsatz von Wärmerohren oder dergleichen in Betracht. Dies ist in Figur 4 aus Gründen der Übersichtlichkeit jeweils nicht dargestellt. Selbst verständlich können auf beiden Seiten der Tragstruktur 7 entsprechende Kühlplatten 16 Verwendung finden.

Abschließend zeigt Figur 5 eine ähnliche Schnittansicht wie die Figur 3. Auch hier ist das vertikale Tragelement 7a mit zwei Kammern 7aa, 7ab ausgestattet, die jeweils zum Leiten des Temperierfluids bestimmt sind, vorliegend jeweils zum Zuleiten frischen Temperierfluids. An jeder der Kammern 7aa, 7ab ist im Bereich einer jeweiligen Aushalsung 15a, 15b ein flexibles Anschlussteil 17 nach Art eines Wellschlauch-Abschnitts mit aufgeweitetem freiem Ende angeordnet, welches Anschlussteil 17 in Richtung einer zugehörigen Aufnahme (Fach) 7c für ein Batteriemodul 2 hervorragt und eine entsprechende Anschlussstruktur bildet. An dem jeweiligen Batteriemodul 2 bzw. B1, B2 ist eine teilweise komplementäre Anschlussstruktur in Form eines starren Rohrleitungsabschnitts 18 vorgesehen, der an seinem freien Ende ein Dichtmittel 19, beispielsweise einen O-Ring, aufweist und fluidleitend mit dem internen Temperierkreislauf (vergleiche Bezugszeichen 4 in Figur 1) des zugehörigen Batteriemoduls 2 in Wirkverbindung steht. Wenn nun die Batteriemodule 2 bzw. B1, B2 in Richtung der Pfeile P1, P2 in die zugehörigen Aufnahmen bzw. Fächer 7c eingeschoben werden, sind vorzugsweise die relativen Abmessungen der Batteriemodule 2 bzw. B1, B2 einerseits und der Fächer 7c andererseits so gewählt, dass die genannten Anschlussstrukturen entlang der strichpunktierten Linien in Figur 5 fluchten, sodass beim Einschieben der Batteriemodule 2 bzw. B1, B2 automatisch eine Fluidverbindung zwischen dem Tragelement 7a einerseits und dem betreffenden Batteriemodul 2 bzw. B1, B2 (also dem internen Temperierkreislauf) hergestellt wird. Für das Ableiten des Temperierfluids aus den Batteriemodulen 2 existieren vorzugsweise entsprechende Anschlussstrukturen, die in der Figur 5 jedoch nicht explizit dargestellt sind.

Bezugszeichen 20 zeigt rein schematisch eine Anschlag- und Sicherungseinrichtung für das betreffende Batteriemodul 2 bzw. B1, B2, welche Einrichtung dafür sorgt, dass das jeweilige Batteriemodul 2 bzw. B1, B2 sicher in seiner Aufnahme (dem Fach 7c) gehalten ist, wodurch zugleich auch die fluidleitende Verbindung im Bereich der genannten Anschlussstrukturen gesichert ist. Außerdem kann es nicht unbeabsichtigter Weise zu einem zu tiefen Einschieben der Batteriemodule 2 bzw. B1, B2 gemäß den Pfeilen P1, P2 kommen, was ansonsten zu einer Beschädigung speziell der Anschlussteile 17 führen könnte. Eine solche Sicherungseinrichtung kann grundsätzlich bei allen Ausgestaltungen der vorliegenden Erfindung zum Einsatz kommen. Sie ist nicht auf die Ausgestaltung gemäß Figur 5 beschränkt.

## Patentansprüche

1. Tragstruktur (7) für eine Anzahl an Batteriemodulen (2), aufweisend:
eine Mehrzahl an Tragelementen (7a, 7b), welche Tragelemente (7a, 7b) voneinander beabstandet angeordnet sind und zwischen sich eine Anzahl an Fächern (7c) ausbilden, welche Fächer (7c) zur Aufnahme jeweils eines Batteriemoduls (2) bestimmt sind;
wobei wenigstens eine Anzahl der Tragelemente (7a) als Fluidleitungselemente ausgebildet sind oder Fluidleitungselemente umfassen, welche Fluidleitungselemente sich bis in den jeweiligen Bereich der Fächer (7c) erstrecken und über welche Fluidleitungselemente ein Temperierfluid für die Batteriemodule (2) in den Bereich der Fächer (7c) zuführbar und von dort wieder ableitbar ist;
**dadurch gekennzeichnet, dass**
die fluidleitenden Tragelemente (7a) paarweise lösbar mit wenigstens einem Dichtelement miteinander verspannt sind, vorzugsweise stoffschlüssig verklebt, verlötet oder verschweißt.

2. Tragstruktur (7) nach Anspruch 1, bei der
wenigstens eine Anzahl der Tragelemente (7a) selbst umfänglich geschlossen und als Fluidleitungselemente ausgebildet sind.

3. Tragstruktur (7) nach Anspruch 1 oder 2, bei der
die fluidleitenden Tragelemente (7a) lösbar, insbesondere durch Verschrauben, oder unlösbar, insbesondere durch Nieten oder durch Stoffschluss, z.B. durch Löten oder Schweißen, mit einer restlichen, nicht fluidleitenden Tragstruktur (7) verbunden sind.

4. Tragstruktur (7) nach einem der Ansprüche 1 bis 3, bei der
wenigstens eine Anzahl der fluidleitenden Tragelemente (7a) mindestens zwei fluidisch getrennte Kammern (7aa, 7ab) oder Fluidleitungselemente aufweisen.

5. Tragstruktur (7) nach einem der Ansprüche 1 bis 4, bei der
wenigstens eine Anzahl der fluidleitenden Tragelemente (7a) mindestens drei fluidisch getrennte Kammern (7aa, 7ab) oder Fluidleitungselemente aufweisen.

6. Tragstruktur (7) nach einem der Ansprüche 1 bis 5, bei der
wenigstens eine Anzahl der fluidleitenden Tragelemente (7a) zusätzliche Kammern zum Führen von Kabeln oder zur Kommunikation oder zur Rauchgasleitung aufweisen.

7. Tragstruktur (7) nach einem der Ansprüche 1 bis 6, bei der
die fluidleitenden Tragelemente (7a) durch Knotenelemente (12), welche Knotenelemente (12) vorzugsweise urformend hergestellt sind, verbunden und verschaltet sind.

8. Tragstruktur (7) nach Anspruch 7, bei der
die Knotenelemente (12) zusätzliche Funktionen, wie Entlüftungsventile, Beprobung, Messelemente/Sensoren (13), Ein- und Ausspeisepunkte oder Fixierungspunkte, aufweisen.

9. Tragstruktur (7) nach Anspruch 7 oder 8, bei der
eine jeweilige Verbindung der fluidleitenden Tragelemente (7a) mit den Knotenelementen (12) nicht lösbar, vorzugsweise stoffschlüssig, oder lösbar ausgeführt sein.

10. Tragstruktur (7) nach einem der Ansprüche 1 bis 9, bei der
fluidische Anschlussstrukturen (17) für die Batteriemodule (2) im Bereich der Fächer vorhanden sind, welche Anschlussstrukturen (17) vorzugsweise flexibel ausgebildet sind, höchst vorzugsweise in Form von Wellschlauchabschnitten oder Bälgen, die in einer Einschieberichtung (P1, P2) beim Einschieben der Batteriemodule (2) in die Fächer (7c) zugänglich sind, um beim Einschieben der Batteriemodule (2) eine fluidische Verbindung von Batteriemodulen (2) und fluidleitenden Tragelementen (7a) herzustellen.

11. Tragstruktur (7) nach Anspruch 10, mit
einer Sicherungseinrichtung (20) für die Batteriemodule (2) im Bereich der Fächer (7c), welche Sicherungseinrichtung (20) zugleich zum Sichern der fluidischen Verbindung ausgebildet ist.

12. Tragstruktur (7) nach einem der Ansprüche 1 bis 11, bei der
im Bereich wenigstens einiger Fächer (7c) jeweils eine Bodenplatte (11) vorhanden ist, welche Bodenplatte (11) für eine wärmeleitenden Kontaktierung eines Batteriemoduls (2) bestimmt ist und welche Bodenplatte (11) fluidisch mit wenigstens einem fluidleitenden Tragelement verbunden ist.

13. Tragstruktur (7) nach einem der Ansprüche 1 bis 12, bei der
im Bereich wenigstens einiger Fächer (7c) jeweils eine Bodenplatte (11) vorhanden ist, welche Bodenplatte (11) für eine wärmeleitenden Kontaktierung eines Batteriemoduls (2) bestimmt ist und welche Bodenplatte (11) über wenigstens ein Wärmerohr mit wenigstens einem fluidleitenden Tragelement (7a) verbunden ist.

14. Tragstruktur (7) nach einem der Ansprüche 1 bis 13, bei der
im Bereich wenigstens einiger Fächer (7c) jeweils wenigstens eine seitliche Kühlplatte (16) vorhanden ist, welche Kühlplatte (16) für eine wärmeleitenden Kontaktierung eines Batteriemoduls (2) bestimmt ist.

15. Batteriemodulanordnung (1), umfassend die Tragstruktur (7) nach einem der vorangehenden Ansprüche und eine Anzahl an Batteriemodulen (2), die in Fächern (7c) der Tragstruktur (7) aufgenommen sind, welche Batteriemodule (2) einen internen Temperierkreislauf (4) aufweisen und fluidisch an die fluidleitenden Tragelemente (7a) angeschlossen sind.

16. Batteriemodulanordnung (1) nach Anspruch 15 mit einer Tragstruktur (7) nach Anspruch 11, bei der die fluidischen Anschlussstrukturen (17) für die Batteriemodule (2) im Bereich der Fächer (7c) in der Einschieberichtung (P1, P2) mit zumindest teilweise komplementären, insbesondere starren Anschlussstrukturen (18) der Batteriemodule (2) fluchten, um beim Einschieben der Batteriemodule (2) eine fluidische Verbindung von Batteriemodulen (2) und fluidleitenden Tragelementen (7a) herzustellen, wobei vorzugsweise die komplementären Anschlussstrukturen (18) der Batteriemodule (2) in die Anschlussstrukturen (17) der Tragstruktur (7) eingreifen, oder umgekehrt, vorzugsweise unter Zwischenschaltung wenigstens eines Dichtelements (19), welches Dichtelement (19) vorzugsweise an den Anschlussstrukturen (18) der Batteriemodule (2) angeordnet ist.

## Claims

1. Support structure (7) for a number of battery modules (2), having:
a plurality of support elements (7a, 7b), which support elements (7a, 7b) are arranged spaced apart from one another and between them form a number of compartments (7c), which compartments (7c) are intended to each receive a battery module (2);
wherein at least a number of support elements (7a) are configured as fluid-conducting elements or comprise fluid-conducting elements, which fluid-conducting elements extend into the respective area of the compartments (7c) and via which fluid-conducting elements a temperature-controlling fluid for the battery modules (2) can be fed into the area of the compartments (7c) and discharged again from there;
**characterized in that**
the fluid-conducting support elements (7a) are connected to one another detachably in pairs by at least one sealing element, preferably material-bonded, soldered or welded.

2. Support structure (7) according to claim 1, wherein
at least a number of the support elements (7a) are themselves closed around the periphery and are configured as fluid-conducting elements.

3. Support structure (7) according to claim 1 or claim 2, wherein
the fluid-conducting support elements (7a) are connected to a remaining, non-fluid-conducting support structure (7) in a detachable manner, in particular by screws, or in a non-detachable manner, in particular by rivets or by material bonding, e.g. by soldering or welding.

4. Support structure (7) according to any one of claims 1 to 3, wherein
at least a number of fluid-conducting support elements (7a) have at least two fluidically separated chambers (7aa, 7ab) or fluid-conducting elements.

5. Support structure (7) according to any one of claims 1 to 4, wherein
at least a number of the fluid-conducting support elements (7a) have at least three fluidically separated chambers (7aa, 7ab) or fluid-conducting elements.

6. Support structure (7) according to any one of claims 1 to 5, wherein
at least a number of the fluid-conducting support elements (7a) have additional chambers for guiding cables or for communication or for conducting flue gas.

7. Support structure (7) according to any one of claims 1 to 6, wherein
the fluid-conducting support elements (7a) are connected and interconnected by node elements (12), which node elements (12) are preferably produced by original forms.

8. Support structure (7) according to claim 7, wherein
the node elements (12) have additional functions, such as venting valves, sampling, measuring elements/sensors (13), feed and discharge points or fixing points.

9. Support structure (7) according to claim 7 or 8, wherein
a respective connection of the fluid-conducting support elements (7a) to the node elements (12) is configured to be non-detachable, preferably material-bonded, or detachable.

10. Support structure (7) according to any one of claims 1 to 9, wherein
fluidic connecting structures (17) for the battery modules (2) are provided in the area of the compartments, which connecting structures (17) are preferably configured to be flexible, most preferably in the form of corrugated hose sections or bellows, which are accessible in an insertion direction (P1, P2) when the battery modules (2) are inserted into the compartments (7c) in order to establish a fluidic connection between the battery modules (2) and fluid-conducting support elements (7a) when the battery modules (2) are inserted.

11. Support structure (7) according to claim 10, with
a securing apparatus (20) for the battery modules (2) in the area of the compartments (7c), which securing apparatus (20) is also configured to secure the fluidic connection.

12. Support structure (7) according to any one of claims 1 to 11, wherein
in the area of at least some compartments (7c) there is a base plate (11) respectively, which base plate (11) is intended for the thermally conductive contacting of a battery module (2) and which base plate (11) is fluidically connected to at least one fluid-conducting support element.

13. Support structure (7) according to any one of claims 1 to 12, wherein
a base plate (11) is provided in the area of at least some compartments (7c), which base plate (11) is intended to contact a battery module (2) in a thermally-conductive manner and which base plate (11) is connected to at least one fluid-conducting support element (7a) via at least one heat pipe.

14. Support structure (7) according to any one of claims 1 to 13, wherein
in the region of at least some compartments (7c) at least one lateral cooling plate (16) is provided, which cooling plate (16) is intended to contact a battery module (2) in a thermally-conducting manner.

15. Battery module assembly (1), comprising the support structure (7) according to any one of the preceding claims and a number of battery modules (2), which are received in compartments (7c) of the support structure (7), which battery modules (2) have an internal temperature-control circuit (4) and are fluidically connected to the fluid-conducting support elements (7a).

16. Battery module assembly (1) according to claim 15 with a support structure (7) according to claim 11, wherein the fluidic connecting structures (17) for the battery modules (2) in the area of the compartments (7c) are aligned in the insertion direction (P1, P2) with at least partially complementary, in particular rigid connecting structures (18) of the battery modules (2), in order to establish a fluidic connection between the battery modules (2) and fluid-conducting support elements (7a) when the battery modules (2) are inserted, wherein preferably the complementary connecting structures (18) of the battery modules (2) engage in the connecting structures (17) of the support structure (7), or vice versa, preferably with at least one sealing element (19) arranged in between, which sealing element (19) is preferably arranged on the connecting structures (18) of the battery modules (2).

## Revendications

1. Structure porteuse (7) pour un nombre de modules de batteries (2) présentant :
une pluralité d'éléments porteurs (7a, 7b), lesquels éléments porteurs (7a, 7b) sont agencés à distance l'un de l'autre et entre lesquels un nombre de compartiments (7c) se forment, lesquels compartiments (7c) sont destinés à recevoir respectivement un module de batterie (2) ;
dans laquelle au moins un nombre d'éléments porteurs (7a) est formé comme éléments d'acheminement de fluide ou comprend des éléments d'acheminement de fluide, lesquels éléments d'acheminement de fluide s'étendent jusque dans la zone respective des compartiments (7c) et par le biais desquels éléments d'acheminement de fluide un fluide tempéré pour les modules de batterie (2) peut être amené dans la zone des compartiments (7c) et de nouveau évacué de celle-ci ;
**caractérisée en ce que**
les éléments porteurs (7a) acheminant le fluide sont serrés entre eux par paires de manière amovible avec au moins un élément étanche, de préférence collés, brasés ou soudés par complémentarité de matière.

2. Structure porteuse (7) selon la revendication 1, pour laquelle
au moins un nombre d'éléments porteurs (7a) mêmes est fermé sur la périphérie et est formé comme éléments d'acheminement de fluide.

3. Structure porteuse (7) selon la revendication 1 ou 2, pour laquelle
les éléments porteurs (7a) acheminant le fluide sont reliés de manière amovible, en particulier par vissage ou de manière non amovible en particulier par rivetage ou par complémentarité de matière, par exemple par brasage ou soudage, à une structure porteuse (7) restante n'acheminant pas de fluide.

4. Structure porteuse (7) selon l'une quelconque des revendications 1 à 3, pour laquelle
au moins un nombre d'éléments porteurs (7a) acheminant le fluide présente au moins deux chambres (7aa, 7ab) séparées fluidiquement ou éléments d'acheminement de fluide.

5. Structure porteuse (7) selon l'une quelconque des revendications 1 à 4, pour laquelle
au moins un nombre d'éléments porteurs (7a) acheminant le fluide présentent au moins trois chambres (7aa, 7ab) séparées fluidiquement ou éléments d'acheminement de fluide.

6. Structure porteuse (7) selon l'une quelconque des revendications 1 à 5, pour laquelle
au moins un nombre d'éléments porteurs (7a) acheminant le fluide présente des chambres supplémentaires pour le guidage de câbles ou pour la communication ou le guidage de gaz de fumées.

7. Structure porteuse (7) selon l'une quelconque des revendications 1 à 6, pour laquelle
les éléments porteurs (7a) acheminant le fluide sont reliés et connectés par des éléments de nœuds (12) qui sont de préférence fabriqués par formage.

8. Structure porteuse (7) selon la revendication 7, pour laquelle
les éléments de nœuds (12) présentent des fonctions supplémentaires, telles que des soupapes de ventilation, un échantillonnage, des éléments de mesure/capteurs (13), des points d'entrée et de sortie ou des points de fixation.

9. Structure porteuse (7) selon la revendication 7 ou 8, pour laquelle
une liaison respective des éléments porteurs (7a) acheminant le fluide est réalisée avec les éléments de nœud (12) de manière non amovible, de préférence par complémentarité de matière ou de manière amovible.

10. Structure porteuse (7) selon l'une quelconque des revendications 1 à 9, pour laquelle
des structures de raccordement (17) fluidiques pour les modules de batterie (2) sont présentes dans la zone des compartiments, lesquelles structures de raccordement (17) sont de préférence formées de manière flexible, le plus préférentiellement sous la forme de sections de tuyau ondulé ou soufflets qui sont accessibles dans un sens d'insertion (P1, P2) lorsque les modules de batterie (2) sont insérés dans les compartiments (7c) afin d'établir une liaison fluidique des modules de batterie (2) et des éléments porteurs (7a) acheminant le fluide lorsque les modules de batterie (2) sont insérés.

11. Structure porteuse (7) selon la revendication 10, avec
un dispositif de sécurité (20) pour les modules de batterie (2) dans la zone des compartiments (7c), lequel dispositif de sécurité (20) est formé en même temps pour sécuriser la liaison fluidique.

12. Structure porteuse (7) selon l'une quelconque des revendications 1 à 11, pour laquelle
respectivement une plaque de fond (11) est présente dans la zone d'au moins quelques compartiments (7c), laquelle plaque de fond (11) est destinée à un contact thermoconducteur d'un module de batterie (2) et laquelle plaque de fond (11) est reliée de manière fluidique à au moins un élément porteur acheminant le fluide.

13. Structure porteuse (7) selon l'une quelconque des revendications 1 à 12, pour laquelle
respectivement une plaque de fond (11) est présente dans la zone d'au moins certains compartiments (7c), laquelle plaque de fond (11) est destinée à un contact thermoconducteur d'un module de batterie (2) et laquelle plaque de fond (11) est reliée par le biais d'au moins un tube caloporteur à au moins un élément porteur (7a) acheminant le fluide.

14. Structure porteuse (7) selon l'une quelconque des revendications 1 à 13, pour laquelle
respectivement au moins une plaque de refroidissement (16) latérale est présente dans la zone d'au moins certains compartiments (7c), laquelle plaque de refroidissement (16) est destinée à un contact thermoconducteur d'un module de batterie (2).

15. Ensemble module de batterie (1) comprenant la structure porteuse (7) selon l'une quelconque des revendications précédentes et un nombre de modules de batterie (2) qui sont logés dans des compartiments (7c) de la structure porteuse (7), lesquels modules de batterie (2) présentent un circuit tempéré interne (4) et sont raccordés de manière fluidique aux éléments porteurs (7a) acheminant le fluide.

16. Ensemble module de batterie (1) selon la revendication 15 avec une structure porteuse (7) selon la revendication 11, pour lequel les structures de raccordement (17) fluidiques pour les modules de batterie (2) s'alignent dans la zone des compartiments (7c) dans le sens d'insertion (P1, P2) sur des structures de raccordement (18) au moins partiellement complémentaires, en particulier rigides des modules de batterie (2) afin d'établir une liaison fluidique de modules de batterie (2) et d'éléments porteurs (7a) acheminant le fluide lorsque les modules de batterie (2) sont insérés, dans lequel de préférence les structures de raccordement (18) complémentaires des modules de batterie (2) viennent en prise dans les structures de raccordement (17) de la structure porteuse (7) ou inversement, de préférence en intercalant au moins un élément étanche (19), lequel élément étanche (19) est de préférence agencé aux niveau des structures de raccordement (8) des modules de batterie (2).
